# EUROPÄISCHE PATENTANMELDUNG

(11) **EP 1 151 969 A2**
(43) Veröffentlichungstag der Anmeldung: **07.11.2001**
(21) Anmeldenummer: 01109909.0
(22) Anmeldetag: 24.04.2001
(51) Int. Cl.: C03B 5/187, C03B 7/092, B01F 7/16, B01F 7/22, B01F 15/00

(54) **Rührer für Glasschmelzen**

(30) Priorität: 02.05.2000 AT 3232000
(71) Anmelder: PLANSEE Aktiengesellschaft, 6600 Reutte, Tirol (AT)
(72) Erfinder: Walser, Hermann, 6600 Breitenwand (AT); Martinz, Hans-Peter, Dr., 6600 Höfen (AT)
(74) Vertreter: Lohnert, Wolfgang, Dr.

(57) **Zusammenfassung**

Die Erfindung betrifft einen geteilten Rührer für Glasschmelzen. Das Rührelement (1) weist einen Wellenabschnitt (3) auf und besteht aus hochschmelzendem Metall oder einer hochschmelzenden Metalllegierung. Die Antriebswelle (2) für das Rührelement (1) besteht aus einem andersartigen metallischen Werkstoff, beispielsweise einer ODS-Legierung auf Eisen- oder Nickelbasis. Die Verbindungsstelle zwischen Rührelement (1) und Antriebswelle (2) liegt etwa in dem Bereich, in dem im Einsatz üblicherweise der Oberflächenspiegel (11) der Glasschmelze liegt. Der Endbereich der Antriebswelle (2) oder der Endbereich des Wellenabschnittes (3) welche im Betrieb von Schmelze bedeckt sein können, sind durch eine Platinumummantelung (5) bedeckt.

## Beschreibung

Die Erfindung betrifft einen Rührer für Glasschmelzen, bestehend aus einem Rührelement und einer Antriebswelle die mechanisch miteinander verbunden sind, wobei das Rührelement aus hochschmelzendem Metall oder einer hochschmelzenden Metalllegierung und die Antriebswelle aus einem andersartigen metallischen Werkstoff besteht.

Die technische Aufbereitung von Glasschmelzen im Schmelzofen verlangt eine Konvektion der Schmelze und diese wird in der Regel mittels Rühreinrichtungen gefördert. Wegen des steigenden Glasbedarfes und wegen der permanenten Forderung der Verbesserung der Wirtschaftlichkeit der Glasfertigung werden zunehmend größere Glasschmelzvolumen verarbeitet, womit die mechanischen Festigkeitsanforderungen und die Anforderungen an die Standzeit der Glasrührer ebenfalls wachsen. Daneben besteht der Wunsch nach höherer Temperatur der Schmelze um die Verarbeitungsgeschwindigkeit zu steigern und schließlich wachsen auch wegen der Vielfalt von Spezialgläsern mit selektiven, korrosiven Stoffzusätzen die Anforderungen an die Korrosionsbeständigkeit der Rührer um keine unerwünschten Verunreinigungen der Glasschmelze zu bewirken.

Das Glas wird in der Regel in geschlossenen Ofenräumen erschmolzen, wobei sich oberhalb der Schmelze eine heiße, korrosive Gasatmosphäre ausbildet. Die von außerhalb des Ofenraumes angetriebenen Rührer für die Glasschmelze durchdringen die Decke des Ofenraumes und sind mit der Antriebswelle in erster Linie der Ofenatmosphäre ausgesetzt, während das eigentliche Rührelement am Ende der Antriebswelle der Glasschmelze selbst ausgesetzt ist.
Das bedeutet, dass die für die Glasrührer verwendeten Werkstoffe einerseits der korrosiven Beanspruchung durch die Ofenatmosphäre und andererseits der korrosiven Beanspruchung durch die Glasschmelze, die von der Beanspruchung her deutlich unterschiedlich sind, widerstehen müssen. Andererseits dürfen die eingesetzten Werkstoffe zu keiner Verunreinigung der Glasschmelze führen.

Ein Werkstoff der allen diesen unterschiedlichen korrosiven Beanspruchungen in hervorragender Weise genügt und die Glasschmelze in keiner Weise verunreinigt, ist Platin.
Die Nachteile des Platins liegen jedoch in seinen extrem hohen Kosten. Rührer deren Oberfläche vollständig aus Platin bestehen, können daher nur in begrenztem Umfang bei der Herstellung von besonders hochwertigem Glas wie Glas zur Herstellung von Fernsehpanneelen oder bei Glaskeramikschmelzen zur Herstellung von Glaskeramikkochfeldern und auch dort nur in Form von hohlen Rührerkonstruktionen oder platinummantelten Molybdänkernen zum Einsatz kommen.

Glasrührer aus keramischen Materialien widerstehen zwar gut der Korrosion durch die Ofenatmosphäre, sind jedoch gegenüber der Glasschmelze weniger beständig und verunreinigen die Glasschmelze durch Keramikpartikel. Hinzu kommt, dass die Formgebungsmöglichkeit der Rührer gegenüber metallischen Rührern stark eingeschränkt ist und die Thermoschockbeständigkeit äußerst schlecht ist. Daher kommen auch Rührer aus keramischen Materialien trotz ihrer extrem günstigen Kosten auch nur in beschränktem Maße zur Anwendung.

Hochschmelzende Metalle und deren Legierungen, insbesondere Molybdän, sind ebenfalls in Verwendung für Glasrührer. Während die Korrosionsbeständigkeit des Molybdäns gegenüber der Glasschmelze gut ist und die Verunreinigung der Glasschmelze für die meisten Anwendungen vernachlässigbar ist, ist Molybdän gegenüber Luft/Sauerstoff und gegenüber aggressiven gasförmigen Medien vor allem bei Temperaturen über 400°C stark reaktionsanfällig, so dass bei Glasrührern aus Molybdän die Antriebswelle die in der korrosiven Ofenatmosphäre außerhalb der Glasschmelze liegt, durch zusätzliche Maßnahmen gegen Korrosion geschützt werden muss.

Eine Möglichkeit dies zu erreichen wird beispielsweise in der DE 25 00 793 A beschrieben, nach welcher bei einem vollständig aus Molybdän bestehenden Glasrührer die Antriebswelle von einem bis in die Schmelze eintauchenden Rohr aus Platin oder einer Platinlegierung mit etwas Abstand umgeben ist, wobei der Zwischenraum zwischen dem Platinrohr und der Molybdänwelle von einem Inertgas durchströmt wird.
Nachteilig dabei ist, dass die gesamte Länge der Antriebswelle, die der korrosiven Ofenatmosphäre ausgesetzt ist, von dem Platinrohr umhüllt sein muss, was einen derartigen Glasrührer wiederum sehr kostenaufwendig macht. Darüber hinaus verteuert die Inertgasspülung den Glasherstellprozess und führt zu unerwünschten Blaseneinschlüssen in der Glasschmelze.

Eine andere Möglichkeit einen Glasrührer zu schaffen der sowohl gute Korrosionsbeständigkeit gegenüber der korrosiven Ofenatmosphäre als auch gegenüber der Glasschmelze aufweist, besteht in einer Teilung des Glasrührers und Ausführung der Teile aus verschiedenen Werkstoffen, wie es beispielsweise in der US 3 539 691 beschrieben ist.
Entsprechend diesem Dokument wird das eigentliche Rührorgan am Ende des Rührers vorzugsweise aus Molybdän hergestellt, während die Antriebswelle bis zum Rührorgan einschließlich dem in die Glasschmelze eintauchenden Abschnitt, aus einem anderen Werkstoff wie aus Kupfer oder einer Eisenlegierung hergestellt wird.
Nachteilig bei einem derartigen Glasrührer ist, dass die Schnittstelle der beiden Rührerteile innerhalb der Glasschmelze liegt und die Glasschmelze den in der Glasschmelze liegenden Abschnitt der Antriebswelle, welcher aus dem in erster Linie gegenüber der korrosiven Ofenatmosphäre beständigen Werkstoff besteht, stark korrosiv angreift, wodurch es zu einem frühzeitigen Ausfall des Glasrührers kommt. Darüber hinaus müssen die in die Glasschmelze eintauchenden Abschnitte der Antriebswelle innen gekühlt werden, um eine auch bei der Temperatur der Glasschmelze noch ausreichende mechanische Festigkeit der Antriebswelle zu gewährleisten.

Die Aufgabe der vorliegenden Erfindung ist es daher, einen Glasrührer zu schaffen, der kostengünstig ist und trotzdem ausgezeichnete Korrosionsbeständigkeit sowohl gegenüber der Ofenatmosphäre als auch gegenüber der Glasschmelze aufweist so dass es damit zu keiner unzulässigen Verunreinigung der Glasschmelze kommt. Darüber hinaus ist die mechanische Festigkeit des Rührers zu gewährleisten.

Erfindungsgemäß wird dies dadurch erreicht, dass das Rührelement einen Wellenabschnitt aus hochschmelzendem Metall oder einer hochschmelzenden Metalllegierung aufweist derart, dass die mechanische Verbindung zwischen Wellenabschnitt und Antriebswelle etwa dort lokalisiert ist, wo im Einsatz der Oberflächenspiegel der Glasschmelze liegt und dass die Endbereiche von Antriebswelle und/oder Wellenabschnitt mit einer Platinummantelung auf einer Länge versehen sind, welche den möglichen Schwankungsbereich des Oberflächenspiegels umfasst.

Dadurch, dass das Rührelement mit einem Wellenabschnitt ebenfalls aus einem hochschmelzenden Metall oder einer hochschmelzenden Metalllegierung versehen wird, kann die Verbindungsstelle zwischen Antriebswelle und Rührelement in den Bereich verlagert werden, in dem üblicherweise der Spiegel der Glasschmelze am Glasrührer anliegt. Um zu erreichen dass, bedingt durch die Schwankungen des Schmelzspiegels während des Betriebes, weder die Rühreinrichtung mit der Ofenatmosphäre noch die Antriebswelle mit der Glasschmelze in Berührung kommt, ist der Abschnitt des Rührers und/oder der Antriebsachse der in der unmittelbaren Umgebung der Verbindungsstelle liegt, mit einer Platinummantelung versehen. Da die Schwankungen des Schmelzenspiegels in der Regel nicht sehr groß sind, kann auch die Platinummantelung entsprechend kurz sein, so dass der Glasrührer sehr kostengünstig ist.

Vorzugsweise ist die Verbindungsstelle so gelegt, dass sie unter Berücksichtigung der Schwankungen des Schmelzenspiegels mit ausreichendem Abstand immer oberhalb des Schmelzenspiegels liegt. In diesem Fall ist es ausreichend, lediglich den Endabschnitt des Wellenendes des Rührelementes von der Verbindungsstelle an abwärts mit einer Platinummantelung zu versehen.
Liegt die Verbindungsstelle knapp unterhalb des Normalspiegels der Schmelze, wird von der Verbindungsstelle an aufwärts lediglich der Endabschnitt der Antriebswelle mit einer Platinummantelung zu versehen sein.

Liegt die Verbindungsstelle in der Höhe des Normalspiegels der Schmelze, wird sowohl der Endabschnitt der Antriebswelle als auch der Endabschnitt des Wellenendes des Rührelementes mit einer Platinummantelung zu versehen sein.

In einer besonders vorteilhaften Ausgestaltung der Erfindung ist das Material für das Rührelement Molybdän oder eine Molybdänlegierung und das Material für die Antriebswelle eine ODS-Legierung (Oxide Dispersion Strengthened) auf Eisen- oder Nickelbasis. Eine derartige Materialpaarung ergibt optimale Korrosionsbeständigkeit sowohl gegenüber der Glasschmelze als auch gegenüber der Ofenatmosphäre.

In einer weiteren vorteilhaften Ausgestaltung der Erfindung sind die unterschiedlichen Werkstoffe der Antriebswelle und des Rührelementes sowie die Platinummantelung an den gegenseitigen Berührungsstellen durch eine Diffusionssperrschicht voneinander getrennt. Auf diese Weise wird jede unerwünschte, gegenseitige Reaktion der unterschiedlichen Materialien aufgrund der Einwirkung der Ofenatmosphäre und der Glasschmelze ausgeschlossen.

Besonders bewährt als eine derartige Diffusionssperrschicht hat sich eine Aluminiumoxidschicht die durch bekannte Beschichtungsverfahren wie durch ein CVD- oder ein PVD-Verfahren auf die zu beschichtenden Teile aufgebracht wird.

Von Vorteil ist es, wenn der Werkstoff für die Antriebswelle eine ODS-Legierung auf Eisen- oder Nickelbasis ist, welche Aluminium als Legierungselement enthält. Unter dieser Voraussetzung kann am Endbereich der Antriebswelle allein durch eine gezielte Oxidationsbehandlung eine stabile, geschlossene oberflächliche Diffusionssperrschicht aus Al₂O₃ erzielt werden, ohne dass zusätzliche aufwendige Maßnahmen zur Aufbringung der Schicht durch Beschichtungseinrichtungen angewandt werden müssen.

Als eine vorteilhafte konstruktive Ausführung eines erfindungsgemäßen Glasrührers hat es sich bewährt, wenn der Endbereich des Wellenabschnittes an der Verbindungsstelle zur Antriebswelle einen mit einem Außengewinde versehenen abgesetzten Zapfen mit Außengewinde aufweist, der in einer ein Innengewinde aufweisenden Ausnehmung der Antriebswelle verschraubt ist und dass im abgesetzten Bereich außerhalb des Zapfens zwei ringförmige, vorzugsweise keramische Dichtelemente eingelegt sind zwischen denen der umgebördelte Rand einer Platinhülse, welche den Endbereich des Wellenabschnittes oder der Antriebswelle ummantelt, festgeklemmt ist. Auf diese Weise wird auf einfache kostengünstige Art eine gute, in bezug auf das Wellenende des Rührelementes gasdichte Platinummantelung der zu schützenden Werkstoffe erreicht.

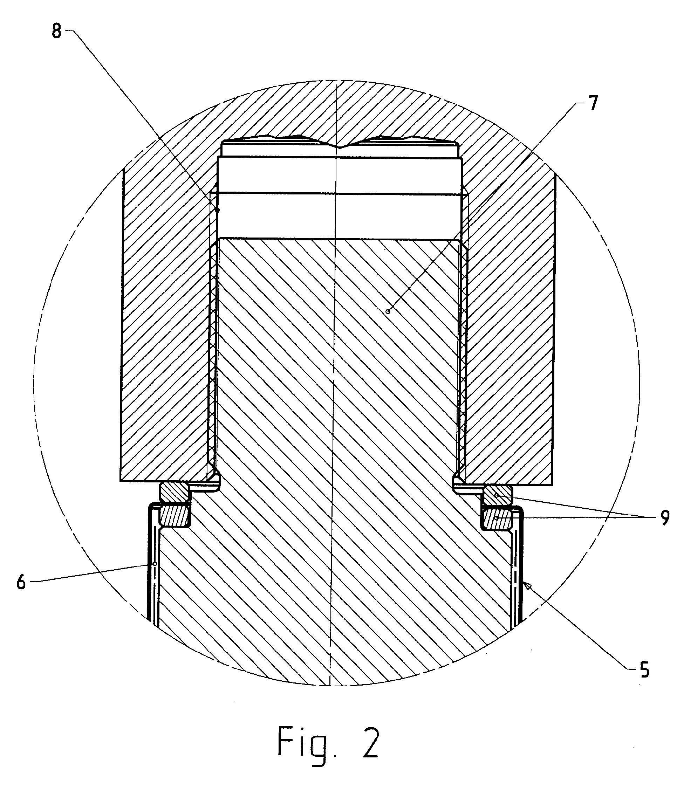

Im folgenden wird die Erfindung an Hand von Figuren näher erläutert.
Es zeigen:

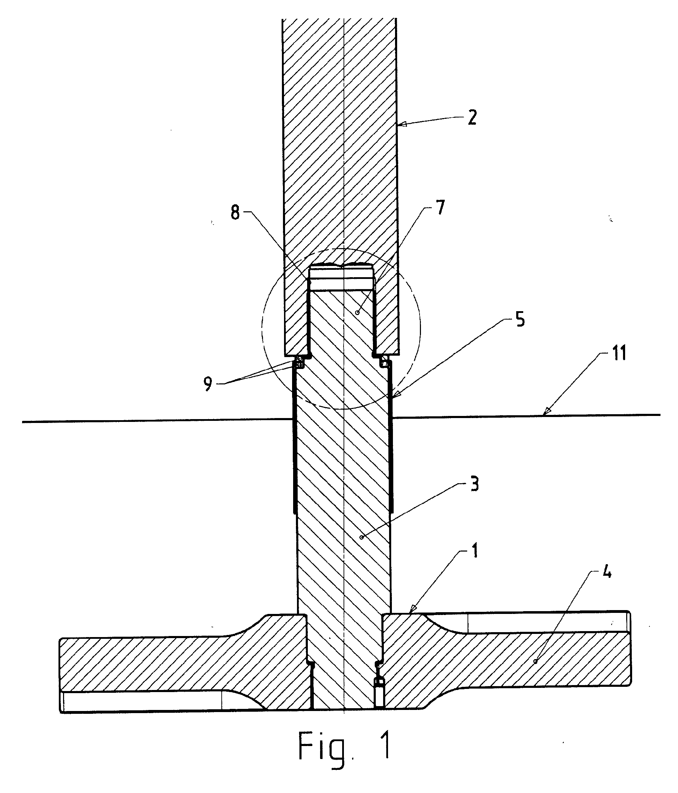

Figur 1, einen erfindungsgemäßen Rührer für Glasschmelzen im Schnitt
Figur 2, die Verbindungsstelle des Rührers nach Figur 1 in vergrößerter Ansicht im Schnitt.
Ein Rührer für Glasschmelzen besteht aus einem Rührelement -1- aus Molybdän, welches aus einem Rührerflügel -4- und einem Wellenabschnitt -3-, der in eine entsprechende Bohrung des Rührerflügels -4- eingepresst ist, aufgebaut ist. Durch die Verwendung von Molybdän als Werkstoff ist das Rührelement -1- äußerst widerstandsfähig gegenüber der korrosiven Beanspruchung durch die Glasschmelze.
Der Endbereich des Wellenabschnittes -3- des Rührelementes -1- weist einen abgesetzten Zapfen -7- mit Außengewinde auf, der in einer entsprechenden Ausnehmung -8- mit Innengewinde im Endabschnitt einer Antriebswelle -2-, welche das Rührelement -1- antreibt, verschraubt ist. Die Antriebswelle -2- liegt außerhalb der Glasschmelze in der Ofenatmosphäre, ist durch die Decke des Glasschmelzofens hindurchgeführt und wird außerhalb des Ofenraumes angetrieben, was in den Figuren nicht dargestellt ist. Die Antriebswelle -2- ist aus einer oxiddispersionsverfestigten Eisenbasislegierung hergestellt, die gegenüber der korrosiven Beanspruchung durch die Ofenatmosphäre äußerst widerstandsfähig ist. Die Verbindungsstelle zwischen Antriebswelle -2- und Rührelement -1- liegt knapp oberhalb der Stelle, an der im Einsatz des Glasrührers üblicherweise der Oberflächenspiegel -11- der Glasschmelze liegen wird. Die genaue konstruktive Ausführung der Verbindungsstelle ist in vergrößerter Darstellung in Figur 2 wiedergegeben. Zwischen der Stirnfläche am Ende der Antriebswelle -2- neben der Ausnehmung -8- und dem stirnseitigen Absatz des Wellenabschnittes außerhalb des Zapfens -3- des Rührelementes -1- sind 2 ringförmige keramische Dichtelemente -9-angeordnet. Zwischen diesen keramischen Dichtelementen -9- ist der umgebördelte Endabschnitt einer Platinhülse -5- angeordnet, welche den Endabschnitt des Wellenabschnittes -3- des Rührelementes -1- ummantelt. Um Diffusionsvorgänge an den Berührungsstellen der Platinhülse -5- mit dem Molybdän des Rührelementes -1- zu vermeiden, sind die Oberflächen des Rührelementes -1- zumindest an den Kontaktstellen mit dem Platin mit einer Diffusionssperrschicht -6- aus Aluminiumoxid versehen. Beim Verschrauben des Zapfens -3- in der Ausnehmung -8- wird die Platinhülse -5- mit ihrem umbördelten Rand gasdicht zwischen den keramischen Dichtelementen -9-festgeklemmt, so dass das Ende des Wellenabschnittes -3- des Rührelementes -1- auch bei einem Absinken des Schmelzspiegels -11- mit Sicherheit von der Ofenatmosphäre abgeschirmt bleibt.

## Patentansprüche

1. Rührer für Glasschmelzen, bestehend aus einem Rührelement (1) und einer Antriebswelle (2) die mechanisch miteinander verbunden sind, wobei das Rührelement (1) aus hochschmelzendem Metall oder einer hochschmelzenden Metalllegierung und die Antriebswelle (2) aus einem andersartigen metallischen Werkstoff besteht
**dadurch gekennzeichnet,**
**dass** das Rührelement (1) einen Wellenabschnitt (3) aus hochschmelzendem Metall oder einer hochschmelzenden Metalllegierung aufweist derart, dass die mechanische Verbindung zwischen Wellenabschnitt (3) und Antriebswelle (2) etwa dort lokalisiert ist, wo im Einsatz der Oberflächenspiegel (11) der Glasschmelze liegt und dass die Endbereiche von Antriebswelle (2) und/oder Wellenabschnitt (3) mit einer Platinummantelung (5) auf einer Länge versehen sind, welche den möglichen Schwankungsbereich des Oberflächenspiegels (11) umfasst.

2. Rührer für Glasschmelzen nach Anspruch 1, **dadurch gekennzeichnet, dass** die Verbindung zwischen Rührelement (1) und Antriebswelle (2) knapp außerhalb der Glasschmelze erfolgt.

3. Rührer für Glasschmelzen nach Anspruch 1 oder 2, **dadurch gekennzeichnet, dass** das Material für das Rührelement (1) Molybdän oder eine Molybdänlegierung und das Material für die Antriebswelle (2) eine ODS-Legierung auf Eisen- oder Nickelbasis ist.

4. Rührer für Glasschmelzen nach Anspruch 3 **dadurch gekennzeichnet, dass** die unterschiedlichen Werkstoffe der Antriebswelle (2) und des Rührelementes (1) sowie die Platinummantelung (5) an den gegenseitigen Berührungsstellen durch eine Diffusionssperrschicht (6) voneinander getrennt sind.

5. Rührer für Glasschmelzen nach Anspruch 4 **dadurch gekennzeichnet, dass** die Diffusionssperrschicht (6) eine Aluminiumoxidschicht ist.

6. Rührer für Glasschmelzen nach einem der Ansprüche 3 bis 5 **dadurch gekennzeichnet, dass** die ODS-Legierung auf Eisen- oder Nickelbasis Aluminium enthält.

7. Rührer für Glasschmelzen nach einem der Ansprüche 1 bis 6, **dadurch gekennzeichnet, dass** der Endbereich des Wellenabschnittes (3) einen abgesetzten, mit einem Außengewinde versehenen Zapfen (7) aufweist, der in einer ein Innengewinde aufweisenden Ausnehmung (8) der Antriebswelle (2) verschraubt ist und dass im abgesetzten Bereich außerhalb des Zapfens (7) zwei ringförmige, vorzugsweise keramische Dichtelemente (9) eingelegt sind, zwischen denen der umgebördelte Rand einer Platinhülse (5), welche den Endbereich des Wellenabschnittes (3) oder der Antriebswelle (2) ummantelt, festgeklemmt ist.
